# EUROPÄISCHE PATENTSCHRIFT

(11) **EP 3 098 555 B1**
(45) Veröffentlichungstag und Bekanntmachung des Hinweises auf die Patenterteilung: **20.09.2017**
(21) Anmeldenummer: 16168921.1
(22) Anmeldetag: 10.05.2016
(51) Int. Cl.: F28F 3/02, F25B 39/02, F28F 13/00, F28F 13/18, F28D 9/00, F28D 15/04, F28D 21/00, F02M 26/22, B60K 13/04, F01N 5/02, F02N 19/04, F16H 57/04

(54) **KRAFTFAHRZEUG-WÄRMEÜBERTRAGERSYSTEM**
MOTOR VEHICLE HEAT TRANSFER SYSTEM
SYSTEME D'ECHANGEUR DE CHALEUR DE VEHICULE AUTOMOBILE

(30) Priorität: 12.05.2015 DE 102015107468
(43) Veröffentlichungstag der Anmeldung: 30.11.2016
(73) Patentinhaber: Benteler Automobiltechnik GmbH, 33102 Paderborn (DE)
(72) Erfinder: Rubitschek, Felix, 33104 Paderborn (DE); Przybylski, Sven, 33104 Paderborn (DE); Enns, Anatoli, 33106 Paderborn (DE); Düpmeier, Dr. Tobias, 33100 Paderborn (DE)
(74) Vertreter: Griepenstroh, Jörg

(56) Entgegenhaltungen:
- EP-A1- 2 799 805
- DE-A1-102010 042 068
- US-A1- 2007 284 087

## Beschreibung

Die Erfindung betrifft ein Kraftfahrzeug-Wärmeübertragersystem gemäß den Merkmalen im Oberbegriff von Anspruch 1. EP 2 799 805 offenbart ein derartiges Wärmeübertragersystem, das zusätzlich eine im Gehäuse angeordnete Kapillarstruktur (K) aufweist Vor dem Hintergrund zunehmend knapper werdender fossiler Ressourcen und gesetzlichen Vorgaben hinsichtlich des CO₂-Austoßes von Kraftfahrzeugen haben Maßnahmen zur Erhöhung des Gesamtwirkungsgrades der Kraftfahrzeuge eine immer höher werdende Bedeutung. Etwa zwei Drittel der chemisch gebundenen Energie zum Antrieb eines Kraftfahrzeuges geht in Form von Verbrennungsabwärme und Reibungswärme verloren. Man ist daher bereits seit Längerem bestrebt, die Abgaswärme besser zu verwerten und zur Effizienzsteigerung von Kraftfahrzeugen zu nutzen. Neben Konzepten zur direkten Energierückgewinnung (Thermoelektrik, Rankine) bieten Maßnahmen in Verbindung des Thermomanagements von Kraftfahrzeugen, beispielsweise mit dem Ziel der Innenraumheizung oder der Verkürzung von Kaltstartphasen, Möglichkeiten zur Abgaswärmenutzung. So kann die Verkürzung von Kaltstartphasen durch eine beschleunigte Aufwärmung von Schmierstoffen, wie dem Motor- oder Getriebeöl, erfolgen, wodurch eine Reduzierung von Reibungsverlusten erzielt werden kann.

Durch die DE 10 2011 103 110 B4 ist ein Abgassystem für einen Verbrennungsmotor eines Kraftfahrzeugs mit einem Kreislaufwärmerohr bekannt. Das Abgassystem weist ein Abgasrohr, einen Kondensator, einen Verdampfer sowie den Kondensator und den Verdampfer verbindende Leitungen auf. Ein Wärmetransport der dem Abgas entzogenen Wärmeenergie erfolgt über ein Arbeitsmedium. Der Verdampfer ist aus einem Abgasrohr, einer Kapillarstruktur und einem Hüllrohr gebildet. Die Kapillarstruktur ist als poröser Körper zwischen dem Abgasrohr und dem Hüllkörper ausgebildet, wobei das Arbeitsmedium beim Durchtritt durch die Kapillarstruktur von einem flüssigen in einen gas- bzw. dampfförmigen Zustand übergeht.

Das Wärmerohr zeichnet sich unter anderem durch einen hohen übertragbaren Wärmestrom und eine flexible geometrische Anordnung aus. Es funktioniert allein durch den Wärmeeintrag ohne ein mechanisches Pumpen des Arbeitsmediums. Möglich ist dies durch die Verwendung einer Kapillarstruktur im Verdampfer, welche die Strömungsdruckverluste des Arbeitsmediums durch den Kapillardruck kompensiert. Das bekannte Wärmerohr ist konzentrisch ausgeführt mit innenliegender Gasführung bzw. innenliegendem Bypass. Dies lässt nur eine einseitige Wärmeabfuhr von innen nach außen zu. Auch ist die Fertigung von rohrförmigen Kapillarstrukturen aufwändig.

Der Erfindung liegt ausgehend vom Stand der Technik die Aufgabe zugrunde, ein für die Praxis verbessertes Kraftfahrzeug-Wärmeübertragersystem mit einem bauraum- und anwendungstechnisch verbesserten, gewichtsmäßig reduzierten sowie fertigungstechnisch vorteilhaften Verdampfer zu schaffen.

Die Lösung dieser Aufgabe besteht nach der Erfindung in einem Kraftfahrzeug-Wärmeübertragersystem gemäß Anspruch 1.

Vorteilhafte Ausgestaltungen und Weiterbildungen des erfindungsgemäßen Kraftfahrzeug-Wärmeübertragersystems und des Erfindungsgedankens sind Gegenstand der abhängigen Ansprüche 2 bis 17.

Das Kraftfahrzeug-Wärmeübertragersystem weist einen geschlossenen Kreislauf für ein Arbeitsmedium auf. In den Kreislauf ist ein Verdampfer integriert, der im Abgasstrom der Brennkraftmaschine des Kraftfahrzeugs angeordnet ist und wärmeübertragend mit dem Abgas in Kontakt gelangt. Das aus der Brennkraftmaschine des Kraftfahrzeugs abgeführte Abgas wird hierzu ganz oder teilweise durch einen Abgaskanal geleitet. Im Verdampfer wird das Arbeitsmedium verdampft und strömt von dort aus zu einem im Kraftfahrzeug angeordneten Kondensator. Im Kondensator erfolgt eine Wärmeübertragung mit einem Verbraucher, wobei das dampfförmige Arbeitsmedium kondensiert und verflüssigt wird. Über eine Rücklaufleitung wird das flüssige Arbeitsmedium in den Verdampfer zurückgeführt.

Erfindungsgemäß umfasst der Verdampfer zumindest eine Verdampferkassette, wobei die Verdampferkassette ein Gehäuse und eine im Gehäuse angeordnete Kapillarstruktur aufweist.

Durch die Kassettenbauweise bzw. plattenförmige Bauweise ist eine Modularisierung und Skalierung möglich. Weiterhin kann auf kompakterem Bauraum eine große Wärmeübertragerfläche realisiert werden. Die effektive Wärmeübertragerfläche kann über die Größe der Verdampferkassette variiert werden. Weiterhin besteht die Möglichkeit, mehrere Verdampfer bzw. Verdampferkassetten parallel zu betreiben und damit über die Anzahl der Abgaskanäle neben der Leistung auch den Wirkungsgrad in bestimmten Betriebspunkten auszulegen.

In der Verdampferkassette sind durch die Kapillarstruktur eine Flüssigseite und eine Dampfseite voneinander getrennt. Die Kapillarstruktur ist vorzugsweise durch einen porösen Plattenkörper gebildet. Ein vorteilhafter Aspekt hierbei sieht vor, dass die Kapillarstruktur aus einem gesinterten Material besteht. Insbesondere ist die Kapillarstruktur auf metallischer Basis ausgeführt.

Im Betrieb tritt das Arbeitsmedium von der Flüssigseite durch die Kapillarstruktur hindurch und verdampft hierbei. Die Phasengrenze zwischen Flüssigkeit und Dampf während des Betriebs des Verdampfers verläuft in der Kapillarstruktur, wodurch ein Kapillardruck aufgebaut wird, der den Kreislauf des Arbeitsmediums bedingt bzw. gewährleistet. Auf der Dampfseite tritt das Arbeitsmedium im gas- bzw. dampfförmigen Zustand aus der Kapillarstruktur aus. Von hier aus wird das dampfförmige Arbeitsmedium im Kreislauf ab- bzw. weitergeleitet.

Die Fertigung der Kapillarstruktur ist besonders vorteilhaft. Die Kapillarstruktur kann separat gefertigt werden. Besonders vorteilhaft ist die Kapillarstruktur aus einer losen metallischen Pulverschüttung gesintert. Dies lässt unterschiedlichste geometrische Gestaltungen der Kapillarstruktur zu. Weiterhin können Dampfkanäle unmittelbar in die Sinterform integriert werden. Vorzugsweise werden die für die Dampfführung notwendigen Dampfkanäle materialeinheitlich einstückig in der Kapillarstruktur ausgebildet.

Grundsätzlich ist es aber auch möglich, die Kapillarstruktur als metallisches Wirrfaservlies auszuführen.

Das Gehäuse besteht vorzugsweise aus einem korrosionsbeständigen Material und/oder gut Wärme leitenden Material, insbesondere einem Metall, vorzugsweise Stahl, insbesondere einem Edelstahl.

In der Kapillarstruktur sind Dampfkanäle ausgebildet. Besonders vorteilhaft sind die Dampfkanäle auf der Dampfseite in der zum Abgaskanal gerichteten Fläche der Kapillarstruktur vorgesehen.

Vorteilhafterweise ist dem Verdampfer bzw. jeder Verdampferkassette eine Dampfsammelkammer zugeordnet, in der der aus dem Verdampfer bzw. der Verdampferkassette strömende Dampf gesammelt und von dort dem Kondensator zugeleitet wird.

Ein besonders vorteilhaftes Kraftfahrzeug-Wärmeübertragersystem sieht vor, dass der Verdampfer mehrere Verdampferkassetten umfasst. Die Verdampferkassetten sind vorzugsweise modulartig so zusammengeschaltet und miteinander gefügt, dass zwischen benachbarten Verdampferkassetten jeweils ein Durchgang für Abgas ausgebildet ist, welches von der Brennkraftmaschine des Kraftfahrzeugs kommt. Dementsprechend ist der Abgaskanal oder sind mehrere Abgaskanäle jeweils zwischen zwei benachbarten miteinander gefügten Verdampferkassetten ausgebildet.

In diesem Zusammenhang ist es weiterhin vorteilhaft, wenn im Abgaskanal bzw. in den Abgaskanälen Mittel zur Vergrößerung der Wärmeübergangsfläche vorgesehen sind. Hierdurch kann eine Steigerung der Effizienz des Wärmeübertrags des heißen Abgases auf das Arbeitsmedium erreicht werden. Bevorzugt sind die Mittel zur Vergrößerung der Wärmeübertragungsfläche als Rippen, Stege oder Lamellen ausgebildet. In der Praxis wird eine Edelstahlblechlamelle als besonders gutes Mittel zur Vergrößerung der Wärmeübertragungsfläche angesehen. Solche Mittel begünstigen den abgasseitigen Wärmeübergang vom Abgasstrom auf das Arbeitsmedium.

Eine Verdampferkassette ist vorzugsweise rechteckig plattenförmig konfiguriert. In einfacher Bauweise besteht das Gehäuse einer Verdampferkassette aus einer Gehäuseschale bzw. -wanne, die durch einen Deckel verschlossen ist. Im Deckel bzw. über den Deckel werden die notwendigen Anschlüsse sowohl für das Arbeitsmedium als auch für einen Druckausgleich integriert. Im Innenraum der Verdampferkassette in die Kapillarstruktur eingegliedert, welche ebenfalls rechteckig plattenförmig konfiguriert ist. Diese Ausgestaltung ist fertigungstechnisch vorteilhaft. Gleiches gilt für den benötigten Bauraum sowie für das Gewicht des Verdampfers.

Herstellungs- und fertigungstechnisch vorteilhaft ist weiterhin, dass das Gehäuse, insbesondere die Gehäuseschale, und der Deckel ebenso wie die Stirnwände bzw. stirnseitigen Blenden als Blechumform- und/oder Stanzteile ausgeführt werden können. Demzufolge sind sie in Großserie kostengünstig herstellbar.

Wie bereits ausgeführt, besteht das Gehäuse vorzugsweise aus Edelstahl. Im Gehäuse bzw. Bestandteil des Gehäuses, insbesondere dem Deckel oder der Gehäuseschale, können Sicken und/oder Ein- bzw. Ausprägungen vorgesehen sein. Solche Materialumformungen, wie Sicken, Ein- oder Ausprägungen, können zur Versteifung bzw. Erhöhung der Steifigkeit des Gehäuses vorgesehen sein. Ebenso können solche Sicken, Ein- oder Ausprägungen als Anschlussflächen oder Strömungskanäle ausgestaltet sein.

Auch können Sicken im Gehäuse, insbesondere im Boden der Gehäuseschale, Dampfrillen bilden. Diese Dampfrillen fungieren zur Kanalisierung bzw. Ableitung des Dampfes auf der Dampfseite einer Verdampferkassette.

Ein vorteilhafter Aspekt sieht hierbei vor, dass im Deckel eine umlaufende in Richtung zum Inneren des Schalenkörpers gerichtete Einprägung bzw. Sicke vorgesehen ist. Die Sicke gelangt auf der Flüssigseite an der Kapillarstruktur zur Anlage gegebenenfalls unter Eingliederung einer hochtemperaturbeständigen Dichtung. Der Zwischenraum zwischen dem Deckel, der Dichtung und der Kapillarstruktur dient als Verteilraum für das zugeführte flüssige Arbeitsmedium.

Weiterhin ist vorgesehen, dass auch in der Gehäuseschale, insbesondere im Boden der Gehäuseschale, sickenförmige Ein- bzw. Ausprägungen vorgesehen sind. Bei zwei benachbarten Verdampferkassetten liegen die Kassetten entlang der Sicken aneinander an und begrenzen den Abgaskanal. Durch die geometrische Gestaltung, insbesondere die Tiefe bzw. Höhe der Sicken wird der Abstand zwischen den Verdampferkassetten bestimmt und damit die Größe des Abgaskanals definiert.

Ein weiterer Aspekt der Erfindung sieht vor, dass die Kapillarstruktur unter Eingliederung von Dichtungen im Gehäuse angeordnet ist. Hierbei kommen insbesondere Hochtemperatur beständige Dichtungen, insbesondere Dichtungen auf Graphitbasis, zum Einsatz. Die Dichtung ist für hohe Temperaturen von mehr als 200°C ausgelegt.

Die Kapillarstruktur und die Dichtung bzw. die Dichtungen sind lose in das Gehäuse eingelegt und über Deckel und Gehäuseschale kraftschlüssig gehalten. Die Gehäuseschale und der Deckel sind stoffschlüssig miteinander gefügt, ebenso die übrigen Bauteile des Wärmetauschers, wie Anschlussleitungen sowie vordere und hintere Stirnwanne bzw. -blech. Hierdurch wird die Dichtigkeit der Wärmetauscherkassette ebenso wie des Abgaskanals gewährleistet. Zur stoffschlüssigen Verbindung kommt beispielsweise Löten, zum Beispiel Ofenlöten, unter Vakuum zur Anwendung. Mittels eines Ofenlötprozesses können eine Vielzahl von Fügestellen gleichzeitig hergestellt werden. Weiterhin können der Deckel, Gehäuseschale und Stirnwände mittels Schweißen gefügt sein.

Ein weiterer vorteilhafter Aspekt sieht vor, dass dem Verdampfer ein Ausgleichsbehälter für das Arbeitsmedium vorgeschaltet ist. Insbesondere ist der Ausgleichsbehälter in die Rücklaufleitung integriert.

Eine vorteilhafte Ausgestaltung sieht vor, dass Mittel für einen Druckausgleich im System, insbesondere im Verdampfer, vorgesehen sind. Hierdurch kann die Effizienz des erfindungsgemäßen Kraftfahrzeug-Wärmeübertragersystems weiter gesteigert werden. Zu diesem Zweck sind insbesondere der Verdampfer und der Ausgleichsbehälter über eine Druckausgleichsleitung miteinander verbunden. Auf diese Weise wird ein niedrigeres Druckniveau im Kreislauf sichergestellt. Durch den Druckausgleich zwischen Verdampfer und Ausgleichsbehälter kann die Arbeitsrichtung des Kreislaufs, insbesondere im Startverhalten, beeinflusst werden. Weiterhin ist hierdurch eine Stabilisierung der Temperatur in der Startphase möglich. Auch wird eine systemvorteilhafte hohe Temperaturdifferenz zwischen Dampfleitung und Kondensatorleistung unterstützt.

Der Herstellprozess einer Kapillarstruktur ist relativ einfach im Vergleich zu einer zylindrischen Struktur. Auch ist die Kapillarstruktur aufgrund ihrer plattenförmigen Gestaltung sehr robust. Besonders vorteilhaft können die Dampfkanäle beim Sinterprozess direkt in die Kapillarstruktur eingebracht werden. Ein weiterer wesentlicher Vorteil ist, dass die Abdichtung zwischen Flüssigseite und Dampfseite des Verdampfers bzw. Verdampferkassette keine aufwändige Passung benötigt. Die Ausgestaltung der erfindungsgemäßen Verdampferkassette und insbesondere der Kapillarstruktur ist damit fehlertolerant bezüglich Form- und Lageabweichungen.

Die Erfindung ist nachfolgend anhand von in den Zeichnungen dargestellten Ausführungsbeispielen näher beschrieben. Es zeigen:
- Figur 1: in perspektivischer Darstellungsweise einen erfindungsgemäßen Wärmetauscher eines Kraftfahrzeug-Wärmeübertragersystems;
- Figur 2: einen Querschnitt durch den Wärmetauscher gemäß Figur 1;
- Figur 3: den Wärmetauscher entsprechend der Figur 1 in einer anderen perspektivischen Ansicht, teilweise in einer Schnittdarstellung;
- Figur 4: eine weitere Ausführungsform eines erfindungsgemäßen Wärmetauschers in einer Perspektive;
- Figur 5: den Wärmetauscher entsprechend der Figur 5 in einer Schnittdarstellung;
- Figur 6: den Wärmetauscher entsprechend der Figur 3 in einer anderen perspektivischen Ansicht, teilweise in einer Schnittdarstellung;
- Figur 7: das Unterteil einer Sinterform zur Herstellung einer Kapillarstruktur und
- Figur 8: die Kapillarstruktur einer Verdampferkassette in einer Perspektive.

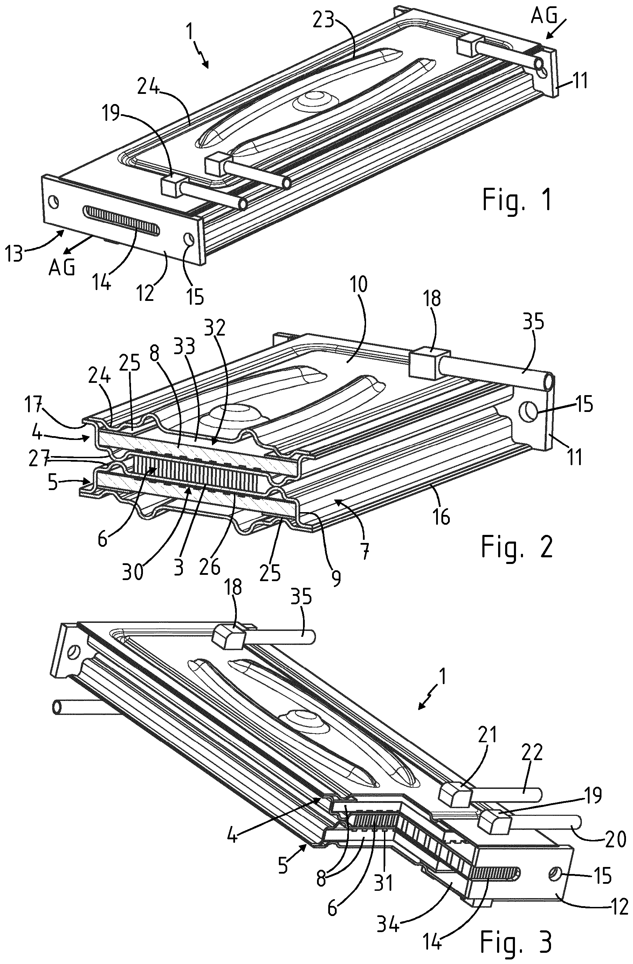

Die Figuren 1 bis 3 sowie 4 bis 6 zeigen jeweils einen Verdampfer 1, 2 eines erfindungsgemäßen Kraftfahrzeug-Wärmeübertragersystems. Die Verdampfer 1, 2 sind gleichartig aufgebaut, so dass einander entsprechende Bauteile bzw. Bauteilkomponenten mit dem gleichen Bezugszeichen versehen sind.

Ein Kraftfahrzeug-Wärmeübertragersystem weist einen geschlossenen Kreislauf für ein Arbeitsmedium auf. Bei dem Arbeitsmedium handelt es sich insbesondere um Ethanol. Zu dem Kraftfahrzeug-Wärmeübertragersystem gehören ein nicht dargestellter Kondensator einschließlich der notwendigen Verbindungsleitungen zwischen Verdampfer 1, 2 und Kondensator sowie ein Ausgleichsbehälter für das Arbeitsmedium. Der Ausgleichsbehälter ist dem Verdampfer 1, 2 vorgeschaltet.

Abgas AG aus der Brennkraftmaschine eines Kraftfahrzeugs wird durch einen Abgaskanal 3 geleitet und gelangt mit dem Verdampfer 1, 2 wärmeübertragend in Kontakt. Der Verdampfer 1, 2 umfasst im hier dargestellten Ausführungsbeispiel zwei Verdampferkassetten 4, 5. Zwischen den modulartig gefügten Verdampferkassetten 4, 5 ist der Abgaskanal 3 ausgebildet. Das Abgas AG wird folglich durch den Abgaskanal 3 zentral zwischen den beiden Verdampferkassetten 4, 5 hindurch geleitet.

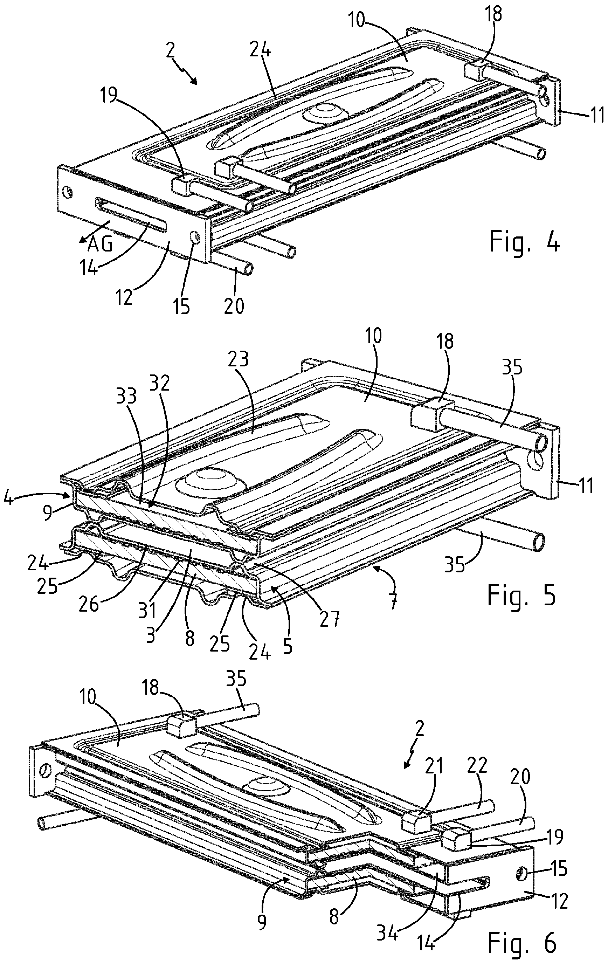

Der in den Figuren 1 bis 3 dargestellte Verdampfer 1 unterscheidet sich von dem Verdampfer 2 gemäß den Figuren 4 bis 6 dadurch, dass im Abgaskanal 3 Mittel 6 zur Vergrößerung der Wärmeübergangsfläche vorgesehen sind. Bei den Mitteln 6 zur Vergrößerung der Wärmeübergangsfläche handelt es sich um in Längsrichtung des Verdampfers 2 orientierte Blechlamellen.

Jede Verdampferkassette 4, 5 weist ein Gehäuse 7 auf. Im Gehäuse 7 ist eine Kapillarstruktur 8 angeordnet.

Das Gehäuse 7 umfasst einen Schalenkörper 9, der öffnungsseitig durch einen Deckel 10 verschlossen ist. Jeweils stirnseitig ist das Gehäuse 7 durch eine Frontblende 11 und eine Heckblende 12 verschlossen. Die Figuren 1 und 3 sowie 4 und 6 zeigen den Verdampfer 1 bzw. 2 jeweils in einer Ansicht von der Austrittsseite 13 des Abgases AG her. In der Frontblende 11 ist eine Eintrittsöffnung in Form eines Langlochs für Abgas AG vorgesehen. Die Heckblende 12 ist mit einer Austrittsöffnung 14 für die Ableitung von Abgas AG versehen. Auch die Austrittsöffnung 14 ist als Langloch ausgeführt (siehe Figur 3 bzw. 6). Die in den Figuren nicht zu erkennende Eintrittsöffnung ist analog zur Austrittsöffnung 14 gestaltet. Weiterhin sind in Frontblende 11 und Heckblende 12 Montageöffnungen 15 integriert. Die Bestandteile des Gehäuses 7, also insbesondere der Schalenkörper 9, der Deckel 10 sowie Frontblende 11 und Heckblende 12, bestehen aus Edelstahl.

Der Schalenkörper 9 weist entlang seiner Seitenränder 16 nach außen umgestellte Flanschabschnitte 17 auf. Auf den Flanschabschnitten 17 liegt der Deckel 10 randseitig auf und ist dicht mit dem Schalenkörper 9 gefügt. Im Deckel 10 ist ein Zulauf 18 für die Zuleitung von flüssigem Arbeitsmedium in die Verdampferkassette 4, 5 integriert. Weiterhin weist der Deckel 10 einen Dampfaustritt 19 mit einer Dampfleitung 20 sowie einen Ausgleichsanschluss 21 für den Anschluss einer Dampfausgleichsleitung 22 auf. Die Dampfausgleichsleitung 22 steht druckausgleichend mit dem hier nicht dargestellten Ausgleichsbehälter in Verbindung.

Weiterhin erkennt man noch Sicken 23 im Deckel 10, welche Stabilisierungsfunktionen haben.

Die Kapillarstruktur 8 ist im Schalenkörper 9 aufgenommen und dort durch den Deckel 10 lageorientiert. Im Deckel 10 ist eine randseitig umlaufende, nach innen gerichtete Einprägung 24 vorgesehen. Die Einprägung 24 bildet eine Druckzone, über die der Deckel 10 gegen die Kapillarstruktur 8 drückt. Zwischen Einprägung 24 und Kapillarstruktur 8 ist eine temperaturbeständige Dichtung 25 eingegliedert. Die Dichtung 25 ist als Flachdichtung ausgeführt.

Im Boden 26 des Schalenkörpers 9 sind an beiden Längsseiten in Längsrichtung des Gehäuses 7 verlaufende nach außen ausgeprägte Sicken 27 vorgesehen. Entlang der Sicken 27 kontaktieren sich zwei benachbarte Verdampferkassetten 4, 5 und sind miteinander gefügt. Zwischen den Verdampferkassetten 4, 5 ist der Abgaskanal 3 ausgebildet. Über die Abmessungen der Sicke 27 kann der Abstand zwischen den Böden 26 der benachbarten Verdampferkassetten 4, 5 und damit die Größe des Abgaskanals 3 bestimmt werden. Seitlich ist der Abgaskanal 3 durch die miteinander gefügten Sicken 27 begrenzt. Die Sicken 27 bilden so die Seitenwände des Abgaskanals 3.

Die in einer Verdampferkassette 4, 5 integrierte Kapillarstruktur 8 ist als poröser Plattenkörper 28 aus einem gesinterten Material, insbesondere einem metallischen Werkstoff, ausgeführt.

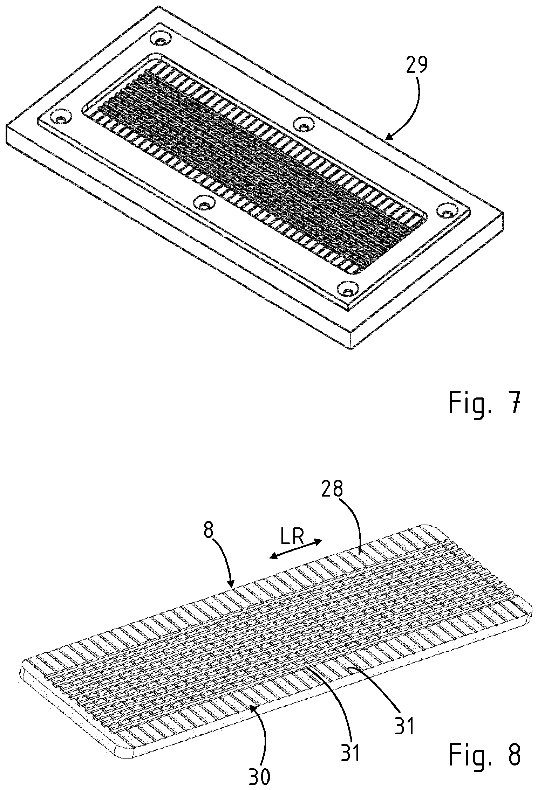

Das Unterteil 29 einer Sinterform ist in Figur 7 dargestellt. In die Sinterform wird ein Metallpulver als lose Pulverschüttung eingefüllt und anschließend bei geschlossener Sinterform unter Temperatureinfluss der Plattenkörper 28 gesintert.

Man erkennt insbesondere in der Figur 8, dass die Kapillarstruktur 8 plattenförmig und rechteckig konfiguriert ist. Die Figur 8 zeigt eine perspektivische Ansicht auf die Dampfseite 30 der Kapillarstruktur 8. Die Dampfseite 30 ist die Seite der Kapillarstruktur 8, welche benachbart zum Boden 26 des Schalenkörpers 9 und dem Abgaskanal 3 angeordnet ist. In der Kapillarstruktur 8 sind in Längsrichtung LR des Plattenkörpers 28 verlaufende Dampfkanäle 31 integriert. Des Weiteren sind quer gerichtete Dampfkanäle 31 ausgebildet.

Das flüssige Arbeitsmedium wird der Verdampferkassette 4, 5 über den Zulauf 18 zugeführt und gelangt auf die Flüssigseite 32 der Verdampferkassette 4, 5. Hier ist zwischen Deckel 10 und Kapillarstruktur 8 bzw. Plattenkörper 28 ein randseitig durch die Einprägung 24 und die Dichtung 25 begrenzter Verteilraum 33 ausgebildet. Das flüssige Arbeitsmedium verteilt sich in dem Verteilraum 33 auf der Flüssigseite 32 über die Fläche der Kapillarstruktur 8. Durch Wärmeübertragung vom durch den Abgaskanal 3 strömenden heißen Abgas AG wird das Arbeitsmedium in den Verdampferkassetten 4,5 verdampft. Das Arbeitsmedium tritt von der Flüssigseite 32 durch die Kapillarstruktur 8 hindurch und geht vom flüssigen in den dampfförmigen Zustand über. Die Phasengrenze zwischen Flüssigkeit und Dampf während des Betriebs des Verdampfers 1, 2 verläuft in der Kapillarstruktur 8, wodurch ein Kapillardruck aufgebaut wird, der den Kreislauf des Arbeitsmediums bedingt bzw. gewährleistet. Auf der Dampfseite 30 strömt das dampfförmige Arbeitsmedium durch die Dampfkanäle 31 bis es jeweils in eine Dampfsammelkammer 34 gelangt. Jede Verdampferkassette 4, 5 weist eine Dampfsammelkammer 34 auf. Das dampfförmige Arbeitsmedium wird aus den Dampfsammelkammern 34 jeweils über den Dampfaustritt 19 und die Dampfleitung 20 abgeführt und zum Kondensator geleitet.

Im Kondensator wird Wärme vom dampfförmigen Arbeitsmedium an einen Verbraucher abgeben. Insbesondere kann der Kondensator Bestandteil einer Erwärmungseinrichtung des Kraftfahrzeugs sein, beispielsweise der Innenraumbeheizung. Auch kann der Kondensator Bestandteil eines Klimamoduls einer Klimaanlage des Kraftfahrzeugs sein. In Folge der Wärmeabgabe wird das dampfförmige Arbeitsmedium im Kondensator verflüssigt und strömt vorzugsweise schwerkraftgetrieben über eine Zulaufleitung 35, die an dem Zulauf 18 angeschlossen ist, zurück in den Verdampfer 1, 2 bzw. die Verdampferkassetten 4, 5, wo das flüssige Arbeitsmedium über die Zuläufe 18 wieder eintritt.

### Bezugszeichen:

- 1 -: Verdampfer
- 2 -: Verdampfer
- 3 -: Abgaskanal
- 4 -: Verdampferkassette
- 5 -: Verdampferkassette
- 6 -: Mittel zur Vergrößerung der Wärmeübergangsfläche
- 7 -: Gehäuse
- 8 -: Kapillarstruktur
- 9 -: Schalenkörper
- 10-: Deckel
- 11 -: Frontblende
- 12-: Heckblende
- 13 -: Austrittsseite
- 14 -: Austrittsöffnung
- 15-: Montageöffnung
- 16-: Seitenrand
- 17-: Flanschabschnitt
- 18 -: Zulauf
- 19 -: Dampfaustritt
- 20 -: Dampfleitung
- 21 -: Ausgleichsanschluss
- 22 -: Dampfausgleichsleitung
- 23 -: Sicken
- 24 -: Einprägung
- 25 -: Dichtung
- 26 -: Boden
- 27 -: Sicken
- 28 -: Plattenkörper
- 29 -: Unterteil
- 30 -: Dampfseite
- 31 -: Dampfkanäle
- 32 -: Flüssigseite
- 33 -: Verteilraum
- 34 -: Dampfsammelkammer
- 35 -: Zulaufleitung

- AG -: Abgas
- LR -: Längsrichtung

## Patentansprüche

1. Kraftfahrzeug-Wärmeübertragersystem mit einem geschlossenen Kreislauf für ein Arbeitsmedium, wobei das Kraftfahrzeug-Wärmeübertragersystem einen Abgaskanal (3) zur Durchleitung von Abgas (AG) aus einer Brennkraftmaschine des Kraftfahrzeugs umfasst und einen den Abgaskanal (3) kontaktierenden Verdampfer (1, 2) zur Verdampfung des Arbeitsmediums aufweist, **dadurch gekennzeichnet, dass** der Verdampfer (1, 2) zumindest eine Verdampferkassette (4, 5) umfasst, wobei die Verdampferkassette (4, 5) ein Gehäuse (7) und eine im Gehäuse (7) angeordnete Kapillarstruktur (8) aufweist.

2. Kraftfahrzeug-Wärmeübertragersystem nach Anspruch 1, **dadurch gekennzeichnet, dass** die Verdampferkassette (4, 5) eine Flüssigseite (32) und eine Dampfseite (30) aufweist, welche durch die Kapillarstruktur (8) getrennt sind.

3. Kraftfahrzeug-Wärmeübertragersystem nach Anspruch 1 oder 2, **dadurch gekennzeichnet, dass** die Kapillarstruktur (8) durch einen porösen Plattenkörper (28) gebildet ist.

4. Kraftfahrzeug-Wärmeübertragersystem nach einem der Ansprüche 1 bis 3, **dadurch gekennzeichnet, dass** die Kapillarstruktur (8) aus einem gesinterten Material besteht.

5. Kraftfahrzeug-Wärmeübertragersystem nach einem der Ansprüche 1 bis 4, **dadurch gekennzeichnet, dass** in der Kapillarstruktur (8) Dampfkanäle (31) ausgebildet sind.

6. Kraftfahrzeug-Wärmeübertragersystem nach Anspruch 5, **dadurch gekennzeichnet, dass** die Dampfkanäle (31) in der zum Abgaskanal (3) gerichteten Fläche der Kapillarstruktur (8) vorgesehen sind.

7. Kraftfahrzeug-Wärmeübertragersystem nach einem der Ansprüche 1 bis 6, **dadurch gekennzeichnet, dass** die Verdampferkassette (4, 5) einen Verteilraum (33) für flüssiges Arbeitsmedium aufweist.

8. Kraftfahrzeug-Wärmeübertragersystem nach einem der Ansprüche 1 bis 7, **dadurch gekennzeichnet, dass** der Verdampferkassette (4, 5) eine Dampfsammelkammer (34) zugeordnet ist.

9. Kraftfahrzeug-Wärmeübertragersystem nach einem der Ansprüche 1 bis 8, **dadurch gekennzeichnet, dass** der Verdampfer (1, 2) mehrere Verdampferkassetten (4, 5) umfasst.

10. Kraftfahrzeug-Wärmeübertragersystem nach einem der Ansprüche 1 bis 9, **dadurch gekennzeichnet, dass** der Abgaskanal (3) zwischen zwei Verdampferkassetten (4, 5) ausgebildet ist.

11. Kraftfahrzeug-Wärmeübertragersystem nach einem der Ansprüche 1 bis 10, **dadurch gekennzeichnet, dass** im Abgaskanal (3) Mittel (6) zur Vergrößerung der Wärmeübergangsfläche vorgesehen sind.

12. Kraftfahrzeug-Wärmeübertragersystem nach einem der Ansprüche 1 bis 11, **dadurch gekennzeichnet, dass** das Gehäuse (7) einen Schalenkörper (9) und einen Deckel (10) aufweist.

13. Kraftfahrzeug-Wärmeübertragersystem nach einem der Ansprüche 1 bis 12, **dadurch gekennzeichnet, dass** das Gehäuse (7) Sicken (23, 27) und/oder Ein- bzw. Ausprägungen (24) aufweist.

14. Kraftfahrzeug-Wärmeübertragersystem nach einem der Ansprüche 1 bis 13, **dadurch gekennzeichnet, dass** die Kapillarstruktur (8) unter Eingliederung von Dichtungen (25) im Gehäuse (7) angeordnet ist.

15. Kraftfahrzeug-Wärmeübertragersystem nach einem der Ansprüche 1 bis 14, **dadurch gekennzeichnet, dass** Mittel für einen Druckausgleich vorgesehen sind.

16. Kraftfahrzeug-Wärmeübertragersystem nach einem der Ansprüche 1 bis 15, **dadurch gekennzeichnet, dass** dem Verdampfer (1, 2) ein Ausgleichsbehälter für das Arbeitsmedium vorgeschaltet ist.

17. Kraftfahrzeug-Wärmeübertragersystem nach einem der Ansprüche 1 bis 16, **dadurch gekennzeichnet, dass** Dampfrillen durch Sicken im Gehäuse der Verdampferkassette (4, 5) gebildet sind.

## Claims

1. Motor vehicle heat transfer system having a closed circuit for an operating medium, wherein the motor vehicle heat transfer system comprises an exhaust gas channel (3) for guiding exhaust gas (AG) from an internal combustion engine of the motor vehicle, and has an evaporator (1, 2) which contacts the exhaust gas channel (3) for evaporating the operating medium, **characterised in that** the evaporator (1, 2) comprises at least one evaporator cartridge (4, 5), wherein the evaporator cartridge (4, 5) has a housing (7) and a capillary structure (8) which is arranged in the housing (7).

2. Motor vehicle heat transfer system according to claim 1, **characterised in that** the evaporator cartridge (4, 5) has a fluid side (32) and a vapour side (30), which are separated by the capillary structure (8).

3. Motor vehicle heat transfer system according to claim 1 or 2, **characterised in that** the capillary structure (8) is formed by means of a porous plate member (28).

4. Motor vehicle heat transfer system according to any one of claims 1 to 3, **characterised in that** the capillary structure (8) comprises a sintered material.

5. Motor vehicle heat transfer system according to any one of claims 1 to 4, **characterised in that** vapour channels (31) are formed in the capillary structure (8).

6. Motor vehicle heat transfer system according to claim 5, **characterised in that** the vapour channels (31) are provided in the face of the capillary structure (8) directed towards the exhaust gas channel (3).

7. Motor vehicle heat transfer system according to any one of claims 1 to 6, **characterised in that** the evaporator cartridge (4, 5) has a distribution space (33) for fluid operating medium.

8. Motor vehicle heat transfer system according to any one of claims 1 to 7, **characterised in that** a vapour collection chamber (34) is associated with the evaporator cartridge (4, 5).

9. Motor vehicle heat transfer system according to any one of claims 1 to 8, **characterised in that** the evaporator (1, 2) comprises a plurality of evaporator cartridges (4,5).

10. Motor vehicle heat transfer system according to any one of claims 1 to 9, **characterised in that** the exhaust gas channel (3) is formed between two evaporator cartridges (4, 5).

11. Motor vehicle heat transfer system according to any one of claims 1 to 10, **characterised in that** means (6) for increasing the heat transfer face are provided in the exhaust gas channel (3).

12. Motor vehicle heat transfer system according to any one of claims 1 to 11, **characterised in that** the housing (7) has a shell member (9) and a cover (10).

13. Motor vehicle heat transfer system according to any one of claims 1 to 12, **characterised in that** the housing (7) has beads (23, 27) and/or indentations or protuberances (24).

14. Motor vehicle heat transfer system according to any one of claims 1 to 13, **characterised in that** the capillary structure (8) is arranged in the housing (7) with seals (25) being introduced.

15. Motor vehicle heat transfer system according to any one of claims 1 to 14, **characterised in that** means for pressure compensation are provided.

16. Motor vehicle heat transfer system according to any one of claims 1 to 15, **characterised in that** a balancing container for the operating medium is arranged upstream of the evaporator (1, 2).

17. Motor vehicle heat transfer system according to any one of claims 1 to 16, **characterised in that** vapour grooves are formed by means of beads in the housing of the evaporator cartridge (4, 5).

## Revendications

1. Système échangeur de chaleur de véhicule automobile avec un circuit fermé pour un fluide de travail, lequel système échangeur de chaleur de véhicule automobile comprend un canal de gaz d'échappement (3) destiné à conduire les gaz d'échappement (AG) hors d'un moteur à combustion interne du véhicule automobile et comporte un évaporateur (1, 2) en contact avec le canal de gaz d'échappement (3) pour l'évaporation du fluide de travail, **caractérisé en ce que** l'évaporateur (1, 2) comprend au moins une cassette d'évaporateur (4, 5), laquelle cassette d'évaporateur (4, 5) comporte un boîtier (7) et une structure capillaire (8) agencée dans le boîtier (7).

2. Système échangeur de chaleur de véhicule automobile selon la revendication 1, **caractérisé en ce que** la cassette d'évaporateur (4, 5) a un côté liquide (32) et un côté vapeur (30) qui sont séparés par la structure capillaire (8).

3. Système échangeur de chaleur de véhicule automobile selon la revendication 1 ou 2, **caractérisé en ce que** la structure capillaire (8) est formée par un corps de plaque (28) poreux.

4. Système échangeur de chaleur de véhicule automobile selon l'une des revendications 1 à 3, **caractérisé en ce que** la structure capillaire (8) est constituée d'un matériau fritté.

5. Système échangeur de chaleur de véhicule automobile selon l'une des revendications 1 à 4, **caractérisé en ce que** des canaux de vapeur (31) sont réalisés dans la structure capillaire (8).

6. Système échangeur de chaleur de véhicule automobile selon la revendication 5, **caractérisé en ce que** les canaux de vapeur (31) sont prévus dans la surface, dirigée vers le canal de gaz d'échappement (3), de la structure capillaire (8).

7. Système échangeur de chaleur de véhicule automobile selon l'une des revendications 1 à 6, **caractérisé en ce que** la cassette d'évaporateur (4, 5) comporte un espace de distribution (33) pour le fluide de travail liquide.

8. Système échangeur de chaleur de véhicule automobile selon l'une des revendications 1 à 7, **caractérisé en ce qu'**une chambre collectrice de vapeur (34) est associée à la cassette d'évaporateur (4, 5).

9. Système échangeur de chaleur de véhicule automobile selon l'une des revendications 1 à 8, **caractérisé en ce que** l'évaporateur (1, 2) comprend plusieurs cassettes d'évaporateur (4, 5).

10. Système échangeur de chaleur de véhicule automobile selon l'une des revendications 1 à 9, **caractérisé en ce que** le canal de gaz d'échappement (3) est réalisé entre deux cassettes d'évaporateur (4, 5).

11. Système échangeur de chaleur de véhicule automobile selon l'une des revendications 1 à 10, **caractérisé en ce que** des moyens (6) destinés à l'agrandissement de la surface de transfert de chaleur sont prévus dans le canal de gaz d'échappement (3).

12. Système échangeur de chaleur de véhicule automobile selon l'une des revendications 1 à 11, **caractérisé en ce que** le boîtier (7) comporte un corps en coque (9) et un couvercle (10).

13. Système échangeur de chaleur de véhicule automobile selon l'une des revendications 1 à 12, **caractérisé en ce que** le boîtier (7) comporte des moulures (23, 27) et/ou des bosses et creux (24).

14. Système échangeur de chaleur de véhicule automobile selon l'une des revendications 1 à 13, **caractérisé en ce que** la structure capillaire (8) est agencée dans le boîtier (7) en intégrant des éléments d'étanchéité (25).

15. Système échangeur de chaleur de véhicule automobile selon l'une des revendications 1 à 14, **caractérisé en ce que** des moyens sont prévus en vue d'une compensation de pression.

16. Système échangeur de chaleur de véhicule automobile selon l'une des revendications 1 à 15, **caractérisé en ce qu'**un récipient de compensation destiné au fluide de travail est placé en amont de l'évaporateur (1, 2).

17. Système échangeur de chaleur de véhicule automobile selon l'une des revendications 1 à 16, **caractérisé en ce que** des cannelures de vapeur sont formées par moulurage dans le boîtier de la cassette d'évaporateur (4, 5).
